# EUROPÄISCHE PATENTSCHRIFT

(11) **EP 2 397 379 B1**
(45) Veröffentlichungstag und Bekanntmachung des Hinweises auf die Patenterteilung: **22.01.2014**
(21) Anmeldenummer: 11004176.1
(22) Anmeldetag: 20.05.2011
(51) Int. Cl.: B60R 22/03, B60R 22/26

(54) **Sicherheitsgurteinrichtung eines Kraftfahrzeugs**
Safety belt device of a motor vehicle
Dispositif de ceinture de sécurité d'un véhicule automobile

(30) Priorität: 19.06.2010 DE 102010024393
(43) Veröffentlichungstag der Anmeldung: 21.12.2011
(73) Patentinhaber: Audi AG, 85045 Ingolstadt (DE)
(72) Erfinder: Tietz, Werner, 85049 Ingolstadt (DE)
(74) Vertreter: Engelhardt, Harald

(56) Entgegenhaltungen:
- DE-A1- 10 055 844
- DE-A1- 10 314 464
- DE-A1-102004 006 465

## Beschreibung

Die Erfindung betrifft eine Sicherheitsgurteinrichtung eines Kraftfahrzeugs nach dem Oberbegriff des Anspruchs 1.

In einer allgemein bekannten Sicherheitsgurteinrichtung eines Kraftfahrzeugs mit einer Dreipunkt-Gurtanordnung verläuft der Gurt in der nicht angelegten Grundstellung von einem unteren seitlichen Gurtanlenkungspunkt nach oben zu einer Gurtführungsblende und von dort hinter eine Verkleidung zu einem Gurtaufroller. Im Bereich zwischen dem unteren festen Gurtanlenkungspunkt und der Gurtführungsblende ist am Gurt verschiebbar eine Steckzunge angeordnet. Gegenüberliegend zum unteren Gurtanlenkungspunkt an der anderen Sitzseite ist ein Gurtschloss zum Einstecken der Steckzunge angebracht. Zum Anlegen des Sicherheitsgurts muss ein Sitzbenutzer weit nach hinten greifen, um den Gurt und die Steckzunge zu erreichen, wonach die Steckzunge in das Gurtschloss eingeführt wird, sodass ein Gurtteil einen Beckengurt und der andere Gurtteil einen schräg vor der Brust verlaufenden Schultergurt bildet.

Bei Fahrzeugen mit einer B-Säule ist der Gurt üblicherweise in dieser geführt und kann zum Anlegen meist ohne Schwierigkeiten erreicht werden. Bei einem Cabriofahrzeug ohne B-Säule und üblicherweise langen Fronttüren liegt dagegen der obere Gurtanlenkungspunkt mit der Gurtführungsblende meist weit hinter der Rücksitzlehne, so dass der Gurt und die Steckzunge nur unbequem und beschwerlich erreichbar sind.

Es ist daher bereits eine gattungsgemäße Sicherheitsgurteinrichtung mit einem Gurtbringer allgemein bekannt, der etwa in Schulterhöhe eines Sitzbenutzers seitlich hinter einer Frontsitzlehne angebracht ist und aus einem Gurttragarm mit einer endseitigen Gurtführungsblende besteht. Dabei ist der Gurt ausgehend von einem fahrzeugfesten unteren Gurtumlenkungspunkt durch die Gurtführungsblende hinter eine Verkleidung über wenigstens eine Umlenkrolle zu einem Gurtaufroller geführt. Weiter weist der Gurtbringer einen Stellantrieb für den Gurttragarm auf, mit dem dieser gesteuert von einer in die Verkleidung eingefahrenen Grundstellung etwa horizontal nach vorne in eine Gurtbereitstellungsposition ausfahrbar ist. Einem Sitzbenutzer wird somit an der dabei nach vorne verlagerten Gurtführungsblende der Gurt zum Ergreifen in einer bequemen Position neben seinem Oberkörper angeboten und bereitgestellt. Nach dem Anlegen des Gurtes wird dann mit dem Stellantrieb der Gurttragarm mit der Gurtführungsblende wieder gesteuert in die Grundstellung als Funktionsstellung der Sicherheitsgurteinrichtung zurückgeführt. Die Gurtführungsblende definiert dann den oberen Gurtanlenkungspunkt in einer Dreipunkt-Gurtanordnung.

Wenn der Gurttragarm mit der Gurtführungsblende in die bequem erreichbare Gurtbereitstellungsposition ausfährt, wird ersichtlich eine größere Gurtlänge abgerollt, als dann später bei zurückgefahrenem Gurttragarm für ein straffes Anliegen des Gurtes an einem Sitzbenutzer erforderlich ist. Die dadurch entstandene Gurtlose muss somit erst wieder über den Gurtaufroller reduziert werden, was gegebenenfalls zusätzliche Handlungen des Sitzbenutzers erforderlich macht. Aufgabe der Erfindung ist es demgegenüber, eine gattungsgemäße Sicherheitsgurteinrichtung eines Kraftfahrzeugs mit einem Gurtbringer so weiterzubilden, dass selbsttätig eine Vorstraffung des Gurtsystems folgt (Pre Safe Gurtlose).

Das Dokument DE 103 14 464 wird als nächstliegender Stand der Technik gegenüber dem Gegenstand des Anspruchs 1 angesehen.

Diese Aufgabe wird dadurch gelöst, dass der Gurtbringer einen bewegungsgesteuerten Gurtmitnehmer aufweist, der bei der Rückführung des Gurttragarms und der Gurtführungsblende selbsttätig in seiner Mitnehmerfunktion aktiviert ist und den Gurt für eine Vorstraffung des Gurts und eine Reduzierung einer Gurtlose mit dem Gurttragarm und/oder der Gurtführungsblende rückführt.

Vorteilhaft wird die Sicherheitsgurtfunktion mit einem solchen Gurtmitnehmer in Verbindung mit einem Gurtbringer dadurch verbessert, dass bereits unmittelbar nach dem Anlegen des Gurts und der Rückführung des Gurtbringers eine Vorstraffung und eine Reduzierung einer Gurtlose erfolgt, so dass der Gurt sicherheitstechnisch einwandfrei körpernah am Sitzbenutzer fest anliegt. Die Mitnehmerfunktion des Gurtmitnehmers wird hierbei vorteilhaft durch die ohnehin vorhandene Gurtbringerbewegung über die Kraft des Gurtbringer-Stellantriebs aktiviert, sodass die Mitnehmerfunktion selbsttätig ohne zusätzliche Antriebe realisiert ist. Wesentlich ist, dass die Mitnehmerfunktion des Gurtmitnehmers bei der Rückführung des Gurttragarms und der Gurtführungsblende aktiviert ist; falls durch eine mechanische Kopplung die Mitnehmerfunktion auch beim Ausfahren des Gurttragarms aktiviert wird, ist dies unerheblich und unschädlich, da dabei ohnehin der Gurt vom Gurtaufroller abgewickelt wird.

Je nach konkreter Realisierung eines solchen Gurtmitnehmers kann die Aktivierung der Mitnehmerfunktion über eine definierte Kraft und/oder einen definierten Rückführweg erfolgen.

Ein Gurtmitnehmer kann konkret dadurch in einer konstruktiv einfachen Anordnung realisiert werden, dass an der Gurtführungsblende ein federvorgespannt am Gurt anliegender Bremsschuh vorgesehen ist, der in einer aus der Grundstellung ausgefahrenen Position anliegt und in der eingefahrenen Grundstellung der Gurtführungsblende durch eine Stellmechanik mittels einer Anlagekraft aus der Bremsposition vom Gurt weg verlagert ist. Eine solche Stellmechanik, die beim Erreichen der Grundstellung nach einer Rückführung selbsttätig verstellt wird, kann mit Schwenkhebeln, Federn, etc. unterschiedlich ausgeführt sein.

Eine einfache Lösung eines Bremsschuhs mit integrierter Stellmechanik besteht in einer bevorzugten Ausführungsform darin, dass der Bremsschuh ein erster Schenkel eines schwenkbar gelagerten Winkelhebels ist und auf den zweiten Schenkel eine Druckfeder, vorzugsweise eine Schenkelfeder wirkt, die sich einerseits gegen eine Rückseite der Gurtführungsblende und andererseits am zweiten Schenkel abstützt. Dabei wird der Bremsschuh in der ausgefahrenen Position der Gurtführungsblende gegen den Gurt gepresst. In der eingefahrenen Grundstellung wird dagegen der zweite Schenkel durch die Rückführkraft des Stellantriebs gegen die Schenkelfederkraft an die Verkleidung und damit an die Rückseite der Gurtführungsblende herangeführt, wobei der erste Schenkel als Bremsschuh vom Gurt abgehoben wird. In der Grundstellung ist somit der Gurt, insbesondere für einen Crashfall frei und ungebremst beweglich.

In einer weiteren Ausgestaltung der oben genannten Bremsschuhanordnung könnte diesem auf der gegenüberliegenden Gurtseite auch eine Abstützfläche zum Einklemmen des Gurts bei der Rückführung zugeordnet sein.

Allgemein kann der Gurtmitnehmer verlagerbare Klemmelemente aufweisen, die am Gurttragarm und/oder der Gurtführungsblende angeordnet sind und zwischen denen der Gurt verläuft. Diese Klemmelemente sind durch eine entsprechende Stellmechanik in der Grundstellung des Gurtmitnehmers für einen freien Gurtdurchgang auseinanderbewegt und zumindest über einen Teil des Rückführwegs und gegebenenfalls des Ausfahrwegs des Gurttragarms in ihre Klemmposition für eine Gurtmitnahme aufeinander zubewegt. Auch mit einer solchen Klemmanordnung ist somit eine selbsttätige Mitnahme und Rückführung des Gurts für eine Vorstraffung des Gurtsystems durchführbar.

In einer besonders bevorzugten konstruktiv einfachen Ausführungsform bestehen die Klemmelemente aus übereinander am Gurttragarm angeordneten Klemmrollen, von denen die untere Klemmrolle in einer etwa vertikalen Schlitzführung eines Lagerbocks gelagert ist. In einem Teilbereich des Ausfahr- und Rückführwegs ist eine fahrzeugfeste Steuerkurve als Rampe dergestalt angebracht, dass dort die untere Klemmrolle aufläuft und in der Schlitzführung in ihre Klemmposition gegen den Gurt und die obere Klemmrolle angehoben und in der Klemmposition über die Steuerkurvenlänge bewegt wird. Vor Erreichen der Grundstellung endet die Steuerkurve, so dass die untere Klemmrolle wieder in ihre untere Ausgangsposition nach unten verlagert wird und die Gurtklemmung aufgehoben ist, so dass in der Grundstellung der Gurt wieder freibeweglich ist.

In einer weiteren alternativen, konstruktiv einfachen Ausführungsform eines Gurtmitnehmers ist im Bereich hinter der Gurtführungsblende eine Bremsrolle am Gurttragarm angebracht, über die der Gurt geführt ist. Die Bremswirkung der Bremsrolle besteht einseitig in eine Drehrichtung entsprechend der Rückführrichtung des Gurttragarms, so dass der Gurt dadurch zusammen mit dem Gurttragarm rückgeführt wird.

Der Gurttragarm kann in an sich bekannter Weise auch in Verbindung mit dem vorstehenden Gurtmitnehmer teilweise als Zahnstange für einen Zahnstangenantrieb ausgebildet sein, wodurch eine einfache lineare Verlagerung des Gurttragarms möglich ist. Es sind jedoch auch andere lineare Antriebe allgemein bekannt und können gegebenenfalls für denselben Zweck verwendet werden.

Da die Gurtmitnehmerfunktion selbsttätig und unabhängig von der Ansteuerung der Gurtbringerfunktion aktiviert wird, kann der Antrieb für den Gurtbringer auch hier in an sich bekannter Weise sowohl willkürlich durch einen Sitzbenutzer mittels eines Tasters und/oder mit Türöffnungsschaltern, Sitzbelegungsschaltern, etc. gesteuert werden.

Besonders vorteilhaft sind Gurtbringer mit der erfindungsgemäßen Weiterbildung durch Gurtmitnehmer in Cabriofahrzeugen ohne B-Säulen einsetzbar.

Anhand einer Zeichnung werden Ausführungsbeispiele der Erfindung näher erläutert.

Es zeigen:
- Fig. 1: eine schematische perspektivische Ansicht auf einen Teil einer Sicherheitsgurteinrichtung eines Kraftfahrzeugs im Bereich eines Gurtbringers mit einem Gurtmitnehmer,
- Fig. 2: eine vergrößerte Darstellung des Gurtmitnehmers in der Grundstellung,
- Fig. 3: den Gurtmitnehmer nach Fig. 2 in seiner Funktionsstellung,
- Fig. 4: eine Seitenansicht eines Gurtbringers mit einer alternativen Ausführungsform eines Gurtmitnehmers,
- Fig. 5: eine vergrößerte Darstellung des Gurtmitnehmers aus Fig. 4, und
- Fig. 6: eine Seitenansicht eines Gurtbringers mit einer weiteren alternativen Ausführungsform eines Gurtmitnehmers.

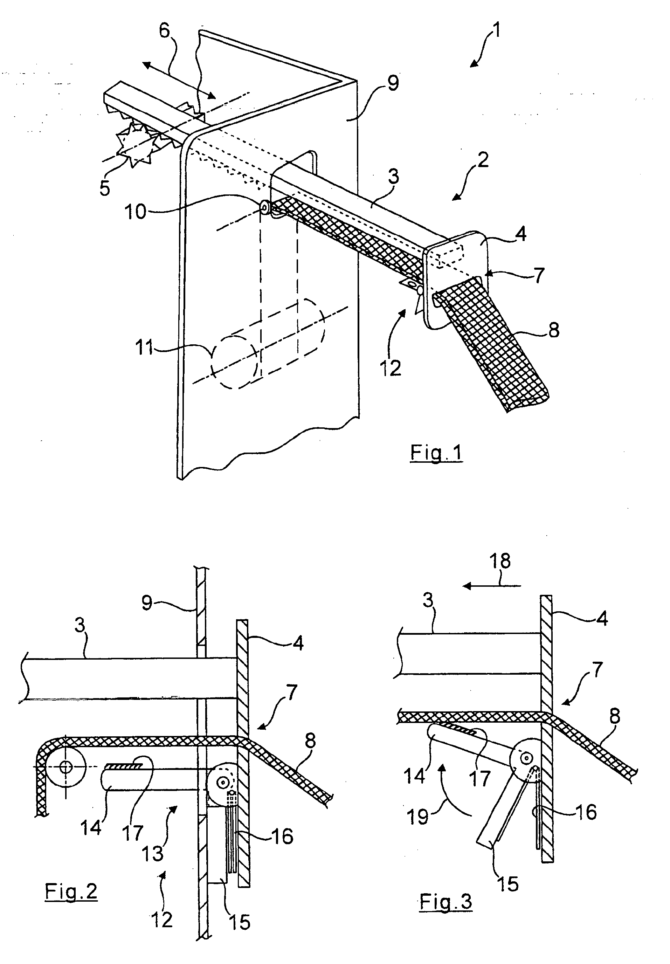

In Fig. 1 ist eine Teilansicht einer Sicherheitsgurteinrichtung eines Cabriofahrzeugs mit einem Gurtbringer 2 dargestellt. Der Gurtbringer 2 besteht aus einem Gurttragarm 3 mit einer endseitigen Gurtführungsblende 4. Der Gurttragarm 3 mit der Gurtführungsblende 4 ist durch einen Stellantrieb 5 als Zahnstangenantrieb linear verstellbar (Doppelpfeil 6).

Unter dem Gurttragarm 3 ist durch einen Aufnahmeschlitz 7 an der Gurtführungsblende 2 ein Gurt 8 hinter eine Verkleidung 9 geführt und über eine Umlenkrolle 10 einem Gurtaufroller 11 zugeführt. An der Rückseite der Gurtführungsblende 4 ist unterhalb des Gurts 8 ein Gurtmitnehmer 12 angebracht, der in den Fig. 2 und 3 vergrößert dargestellt ist und dort weiter erläutert wird.

In Fig. 1 ist der Gurtbringer 2 mit seinem Gurttragarm 3 und der Gurtführungsblende 4 in seiner ausgefahrenen Gurtbereitstellungsposition gezeigt, in der der Gurt 8 an der Gurtführungsblende 4 für ein bequemes Ergreifen durch einen Sitzbenutzer bereitgestellt wird.

Nach dem Anlegen des Gurtes wird der Gurtbringer 2 mit dem Gurttragarm 3 und der Gurtführungsblende 4 durch den Stellantrieb 5 gesteuert zurückgefahren, bis die Gurtführungsblende 4 an der Verkleidung 9 in einer Grundstellung anliegt, wie dies im Schnitt nach Fig. 2 gezeigt ist. Der Gurtmitnehmer 12 besteht im Wesentlichen aus einem Winkelhebel 13, der schwenkbar an der Rückseite der Gurtführungsblende 4 gelagert ist. Ein erster Schenkel des Winkelhebels 13 ist als Bremsschuh 14 ausgebildet. Der zweite Schenkel 15 des Winkelhebels 13 ist durch eine Schenkelfeder 16 als Druckfeder an der Gurtführungsblende 4 abgestützt.

In der eingefahrenen Grundstellung des Gurtbringers 2 nach Fig. 2 liegt der zweite Schenkel 15 bei zusammengepresster Schenkelfeder 16 an der Verkleidung 9 an, so dass der Bremsschuh 14 mit der Bremsauflage 17 ersichtlich von der Unterseite des Gurts 8 abgehoben ist und der Gurt 8 im Aufnahmeschlitz 7 freibeweglich liegt.

Fig. 3 zeigt dagegen die Anordnung nach Fig. 2 in einer ausgefahrenen Position des Gurttragearms 3 während einer Rückführbewegung (Pfeil 18). Dabei ist die Schenkelfeder 16 entsprechen ihrer Federkraft aufgespreizt, sodass der Winkelhebel 13 mit dem Bremsschuh 14 gegen die Unterseite des Gurts 8 geschwenkt ist (Pfeil 19) und damit den Gurt 8 zusammen mit der Rückbewegung des Gurttragarms 3 mitzurücknimmt.

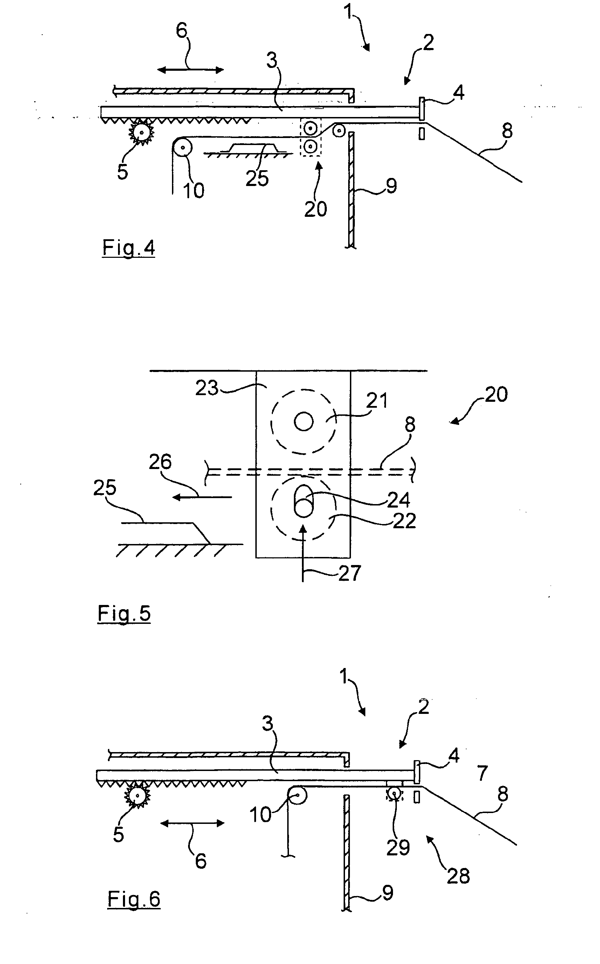

In Fig. 4 ist ebenfalls ein Teil einer Sicherheitsgurteinrichtung 1 mit einem Gurtbringer 2 in einer Seitenansicht dargestellt, wobei jedoch ein alternativer Gurtmitnehmer 20 verwendet ist, der vergrößert in Fig. 5 gezeigt ist. Beim Gurtmitnehmer 20 sind am Gurttragarm 3 zwei Klemmrollen 21, 22 an einem Lagerbock 23 gelagert, wobei die untere Klemmrolle 22 in einer vertikalen Schlitzführung 24 liegt.

In einem Teilbereich des Ausfahr- und Rückführwegs ist eine fahrzeugfeste Steuerkurve 25 als Rampe angebracht. Auf diese Steuerkurve 25 läuft insbesondere bei der Rückführung (Pfeil 26) die untere Klemmrolle 22 auf und wird dadurch in der Schlitzführung 24 so weit angehoben (Pfeil 27), dass sie den Gurt 8 nach oben mitnimmt und für einen Klemmschluss gegen die Klemmrolle 21 klemmt. Der Klemmschluss wird bei der Rückführung (Pfeil 26) solange aufrecht erhalten, bis die Steuerkurve 25 vor Erreichen der Grundstellung endet und der Klemmschluss dann durch Absenken der Klemmrolle 22 wieder freigegeben wird, sodass in der Grundstellung der Gurt 8 wieder frei beweglich ist.

Auch in Fig. 6 ist eine Teilansicht einer Sicherheitsgurteinrichtung 1 mit einem Gurtbringer 2 gezeigt, wobei eine weitere Ausführungsform eines Gurtmitnehmers 28 verwendet ist. Der Gurtmitnehmer 28 besteht hier aus einer Bremsrolle 29 im vorderen Bereich des Tragarms 3 über die der Gurt 8 geführt ist. Die Bremswirkung der Bremsrolle 29 ist jedoch nur einseitig in eine Drehrichtung entsprechend der Rückführung des Gurttragarms 3. Die Bremskraft kann dabei so dimensioniert werden, dass die Bremswirkung bei der Gurtrückführung für eine Vorstraffung des Gurts 8 ausreicht, jedoch bei größeren Zugkräften auf den Gurt 8 überziehbar sind.

## Patentansprüche

1. Sicherheitsgurteinrichtung eines Kraftfahrzeuges,
mit einem Gurtbringer (2), der aus einem etwa in Schulterhöhe eines Sitzbenutzers angebrachten Gurttragarm (3) mit einer endseitigen Gurtführungsblende (4) besteht, wobei der Gurt (8) ausgehend von einem fahrzeugfesten unteren Gurtanlenkungspunkt durch die Gurtführungsblende (4) hinter eine Verkleidung (9) gegebenenfalls über wenigstens eine Umlenkrolle (10) zu einem Gurtaufroller (11) geführt ist, und
mit einem Stellantrieb (5) für den Gurttragarm (3), mit dem dieser gesteuert von einer in die Verkleidung (9) eingefahrenen Grundstellung etwa horizontal nach vorne in eine Gurtbereitstellungsposition ausfahrbar und anschließend wieder in die Grundstellung als Funktionsstellung der Sicherheitsgurteinrichtung (1) rückführbar ist, wobei durch die Gurtführungsblende (4) dann ein oberer Gurtanlenkungspunkt definiert ist und der Gurt (8) als Dreipunktgurt zudem mit einer am Gurt (8) verschiebbaren Steckzunge an einem Gurtschloss festgelegt ist,
**dadurch gekennzeichnet, dass** der Gurtbringer (2) zudem einen bewegungsgesteuerten Gurtmitnehmer (12; 20; 28) aufweist, der bei der Rückführung des Gurttragarms (3) und der Gurtführungsblende (4) selbsttätig in seiner Mitnehmerfunktion aktiviert ist und den Gurt (8) für eine Vorstraffung und eine Reduzierung einer Gurtlose zusammen mit dem Gurttragarm (3) und/oder der Gurtführungsblende (4) rückführt.

2. Sicherheitsgurteinrichtung nach Anspruch 1, **dadurch gekennzeichnet, dass** die Aktivierung der Mitnehmerfunktion des Gurtmitnehmers (12; 20; 28) über eine definierte Kraft und/oder einen definierten Rückführweg erfolgt.

3. Sicherheitsgurteinrichtung nach Anspruch 1 oder 2, **dadurch gekennzeichnet, dass** der Gurtmitnehmer (12) an der Gurtführungsblende (4) einen federvorgespannt am Gurt (8) in einer aus der Grundstellung ausgefahrenen Position anliegenden Bremsschuh (14) aufweist, und dass der Bremsschuh (14) in der eingefahrenen Grundstellung der Gurtführungsblende (4) gegen die Federvorspannung (16) durch eine Stellmechanik mit einer Anlagekraft aus der Bremsposition vom Gurt (8) weg verlagert ist.

4. Sicherheitsgurteinrichtung nach Anspruch 3, **dadurch gekennzeichnet, dass** der Bremsschuh (14) ein erster Schenkel eines schwenkbar gelagerten Winkelhebels (13) ist und auf den zweiten Schenkel (15) eine Druckfeder, vorzugsweise eine Schenkelfeder (16) wirkt, die sich gegen eine Rückseite der Gurtführungsblende (4) abstützt, und
dass in der eingefahrenen Grundstellung der zweite Schenkel(15) durch die Rückführkraft des Stellantriebs (5) gegen die Federkraft an die Verkleidung (9) und damit an die Rückseite der Gurtführungsblende (4) herangeführt und der erste Schenkel als Bremsschuh (14) vom Gurt (8) abgehoben ist.

5. Sicherheitsgurteinrichtung nach Anspruch 1 oder 2, **dadurch gekennzeichnet, dass** der Gurtmitnehmer (20) verlagerbare Klemmelemente (21, 22) aufweist, die am Gurttragarm (3) angeordnet sind und zwischen denen der Gurt (8) verläuft,
dass die Klemmelemente (21, 22) selbsttätig mechanisch in der Grundstellung für einen freien Gurtdurchgang auseinander bewegt sind und zumindest über einen Teil des Rückführwegs und gegebenenfalls des Ausfahrwegs des Gurttragarms (3) in ihre Klemmposition für eine Gurtmitnahme aufeinander zubewegt sind.

6. Sicherheitsgurteinrichtung nach Anspruch 5, **dadurch gekennzeichnet,**
**dass** die Klemmelemente aus übereinander am Gurttragarm angeordneten Klemmrollen (21, 22) bestehen, von denen die untere Klemmrolle (22) in einer etwa vertikalen Schlitzführung (24) eines Lagerbocks (23) gelagert ist, und
**dass** in einem Teilbereich des Ausfahr- und Rückführwegs eine fahrzeugfeste Steuerkurve (25) als Rampe dergestalt angebracht ist, dass dort die untere Klemmrolle (22) aufläuft und in der Schlitzführung (24) in ihre Klemmposition gegen den Gurt (8) und die obere Klemmrolle (21) angehoben und in der Klemmposition über die Steuerkurvenlänge bewegt wird.

7. Sicherheitsgurteinrichtung nach Anspruch 1 oder 2, **dadurch gekennzeichnet, dass** der Gurtmitnehmer (28) dadurch gebildet ist, dass im Bereich hinter der Gurtführungsblende (4) eine Bremsrolle (29) am Gurttragarm (3) angebracht ist, über die der Gurt (8) geführt ist, und dass die Bremswirkung der Bremsrolle (29) einseitig in eine Drehrichtung entsprechend der Rückführrichtung des Gurttragarms (3) besteht, sodass der Gurt (8) dadurch mit dem Gurttragarm (3) rückgeführt wird.

8. Sicherheitsgurteinrichtung nach einem der Ansprüche 1 bis 7, **dadurch gekennzeichnet, dass** der Gurttragarm (3) teilweise als Zahnstange für einen Zahnstangenantrieb (5) ausgebildet ist.

9. Sicherheitsgurteinrichtung nach einem der Ansprüche 1 bis 8, **dadurch gekennzeichnet, dass** der Antrieb für den Gurtbringer (2) willkürlich durch einen Sitzbenutzer mittels eines Tasters und/oder mit Türöffnungsschaltern, Sitzbelegungsschaltern, etc. gesteuert wird.

10. Sicherheitsgurteinrichtung nach einem der Ansprüche 1 bis 9, **dadurch gekennzeichnet, dass** zwei Gurtbringer (2) in einem Cabrio-Fahrzeug ohne B-Säulen jeweils in einem oberen Karosserieseitenbereich hinter den Frontsitzlehnen angebracht sind.

## Claims

1. Safety belt device for a motor vehicle,
comprising a belt feeder (2) which consists of a belt support arm (3) which is mounted approximately at the shoulder height of a seat user and comprises an end belt guide panel (4), the belt (8) being guided, starting from a lower belt articulation point which is fixed to the vehicle, through the belt guide panel (4), behind a facing (9), optionally via at least one deflection roller (10), to a belt retractor (11), and
comprising an actuating drive (5) for the belt support arm (3), by means of which said arm can be extended forwards approximately horizontally in a controlled manner from an initial position in which it is retracted into the facing (9) into a belt provision position and subsequently returned to the initial position as a functional position of the safety belt device (1), an upper belt articulation point then being defined by the belt guide panel (4) and the belt (8), as a three-point belt, also being fixed to a belt buckle by means of a plug-in tongue which can be displaced on the belt (8),
**characterised in that** the belt feeder (2) also comprises a movement-controlled belt carrier (12; 20; 28) which, when the belt support arm (3) and the belt guide panel (4) are returned, is automatically activated in its carrier function and returns the belt (8) together with the belt support arm (3) and/or the belt guide panel (4) for pretightening and reduction of a belt slack.

2. Safety belt device according to claim 1, **characterised in that** the carrier function of the belt carrier (12; 20; 28) is activated via a defined force and/or a defined return path.

3. Safety belt device according to either claim 1 or claim 2, **characterised in that** the belt carrier (12) comprises, at the belt guide panel (4), a brake shoe (14) which rests on the belt (8) in a spring-biased manner in a position extended from the initial position, and **in that**, when the belt guide panel (4) is in the retracted initial position, the brake shoe (14) is displaced out of the brake position away from the belt (8) against the spring bias (16) by an actuating mechanism with a contact force.

4. Safety belt device according to claim 3, **characterised in that** the brake shoe (14) is a first leg of a pivotally mounted angle lever (13), and a compression spring, preferably a leg spring (16), which is supported against a back of the belt guide panel (4) acts on the second leg (15), and
**in that** in the retracted initial position the second leg (15) is moved towards the facing (9) and thus towards the back of the belt guide panel (4) against the spring force by the return force of the actuating drive (5), and the first leg, as the brake shoe (14), is lifted from the belt (8).

5. Safety belt device according to either claim 1 or claim 2, **characterised in that** the belt carrier (20) comprises displaceable clamp elements (21, 22) which are arranged at the belt support arm (3) and between which the belt (8) passes,
**in that** the clamp elements (21, 22) are automatically moved away from each other mechanically in the initial position for a free belt passage and are moved towards each other into their clamping position for belt carrying at least over part of the return path and optionally of the extension path of the belt support arm (3).

6. Safety belt device according to claim 5, **characterised in that** the clamp elements consist of clamp rollers (21, 22) arranged one above the other at the belt support arm, the lower clamp roller (22) of which is mounted in an approximately vertical slot guide (24) of a bearing bracket (23), and
**in that** a cam (25) which is fixed to the vehicle is mounted as a ramp in a partial region of the extension and return path, such that the lower clamp roller (22) rolls thereon and is lifted in the slot guide (24) into its clamping position against the belt (8) and the upper clamp roller (21) and moved in the clamping position over the length of the cam.

7. Safety belt device according to either claim 1 or claim 2, **characterised in that** the belt carrier (28) is formed **in that** a brake roller (29) over which the belt (8) is guided is mounted on the belt support arm (3) in the region behind the belt guide panel (4), and
**in that** the braking effect of the brake roller (29) is unidirectional in a direction of rotation corresponding to the return direction of the belt support arm (3), such that the belt (8) is thereby returned with the belt support arm (3).

8. Safety belt device according to any of claims 1 to 7, **characterised in that** the belt support arm (3) is designed in part as a rack for a rack drive (5).

9. Safety belt device according to any of claims 1 to 8, **characterised in that** the drive for the belt feeder (2) is controlled arbitrarily by a seat user by means of a button and/or using door opening switches, seat occupation switches, etc.

10. Safety belt device according to any of claims 1 to 9, **characterised in that** two belt feeders (2) in a convertible vehicle without B-columns are each mounted in an upper body-side region behind the front seat backs.

## Revendications

1. Dispositif de ceinture de sécurité d'un véhicule automobile, comprenant :
un applicateur de ceinture (2), qui est constitué d'un bras support de ceinture (3) appliqué à peu près à hauteur de l'épaule d'un usager du siège avec une plaquette guide-ceinture terminale (4), dans laquelle la ceinture (8) est guidée d'un point inférieur d'articulation de la ceinture fixé au véhicule à travers la plaquette guide-ceinture (4) derrière un garnissage (9) éventuellement via au moins un rouleau de renvoi (10) sur un enrouleur de ceinture (11), et
un mécanisme de commande (5) pour le bras support de ceinture (3), par lequel celui-ci peut être, par commande, déployé d'une position de base rentrée dans le garnissage plus ou moins horizontalement vers l'avant dans une position de préparation de la ceinture et peut ensuite être ramené en position de base comme position fonctionnelle du dispositif de ceinture de sécurité (1), dans lequel un point supérieur d'articulation de la ceinture est alors défini à travers la plaquette guide-ceinture (4) et la ceinture (8) est fixée en outre en trois points à une languette d'enfichage déplaçable sur la ceinture (8) sur un arrêt de ceinture,
**caractérisé en ce que** l'applicateur de ceinture (2) présente en outre un entraîneur de ceinture (12 ; 20 ; 28) commandé en déplacement qui, lors du retour du bras support de ceinture (3) et de la plaquette guide-ceinture (4), est automatiquement activé dans sa fonction d'entraînement et renvoie la ceinture (8) pour un pré-raidissement et une réduction du mou de la ceinture conjointement avec le bras support de ceinture (3) et/ou la plaquette guide-ceinture (4).

2. Dispositif de ceinture de sécurité selon la revendication 1, **caractérisé en ce que** l'activation de la fonction d'entraînement de l'entraîneur de ceinture (12 ; 20 ; 28) se fait via une force définie et/ou un trajet de renvoi défini.

3. Dispositif de ceinture de sécurité selon la revendication 1 ou la revendication 2, **caractérisé en ce que** l'entraîneur de ceinture (12) présente sur la plaquette guide-ceinture (4) un sabot de frein (14) appliqué en précontrainte élastique sur la ceinture (8) dans une position déployée de la position de base et **en ce que** le sabot de frein (14) est écarté de la position de freinage de la ceinture (8) dans la position de base rentrée de la plaquette guide-ceinture (4) à l'encontre de la précontrainte élastique par un mécanisme de commande avec une force d'appui.

4. Dispositif de ceinture de sécurité selon la revendication 3, **caractérisé en ce que** le sabot de frein (14) est une première branche d'un levier coudé (13) monté à pivotement et sur la seconde branche (15) agit un ressort de compression, de préférence un ressort à branches (16), qui s'appuie contre le verso de la plaquette guide-ceinture (4), et
**en ce que**, dans la position de base rentrée, la seconde branche (15) est rapprochée par la force de renvoi du mécanisme de commande (5) à l'encontre de la force élastique sur le garnissage (9) et, par suite, au verso de la plaquette guide-ceinture (4) et la première branche en tant que sabot de frein (14) est dégagée de la ceinture (8).

5. Dispositif de ceinture de sécurité selon la revendication 1 ou la revendication 2, **caractérisé en ce que** l'entraîneur de ceinture (20) présente des éléments de calage déplaçables (21, 22) qui sont aménagés sur le bras support de ceinture (3) et entre lesquels la ceinture (8) s'étend, et
**en ce que** les éléments de calage (21, 22) sont décalés l'un de l'autre mécaniquement et automatiquement dans la position de base pour un passage libre de la ceinture et sont rapprochés l'un de l'autre au moins sur une partie du trajet de renvoi et éventuellement du trajet de déploiement du bras support de ceinture (3) dans leur position de calage pour un entraînement de la ceinture.

6. Dispositif de ceinture de sécurité selon la revendication 5, **caractérisé en ce que**
les éléments de calage sont constitués de rouleaux de calage (21, 22) aménagés l'un au-dessus de l'autre sur le bras support de ceinture, dont le rouleau de calage inférieur (22) est monté dans un guidage à rainure plus ou moins vertical (24) d'un support de palier (23), et
**en ce que**, dans une zone partielle du trajet de déploiement et de renvoi, une came de commande (25) fixée au véhicule est aménagée sous la forme d'une rampe de sorte que le rouleau de calage inférieur (22) s'y élève et soit déplacé dans le guidage à rainure (24) dans sa position de calage contre la ceinture (8) et le rouleau de calage supérieur (21) et déplacé dans la position de calage sur la longueur de la came de commande.

7. Dispositif de ceinture de sécurité selon la revendication 1 ou la revendication 2, **caractérisé en ce que** l'entraîneur de ceinture (28) est formé de sorte que, dans la zone située derrière la plaquette guide-ceinture (4), il soit monté un rouleau de freinage (29) sur le bras support de ceinture (3), sur lequel la ceinture (8) est guidée et que l'action de freinage du rouleau de freinage (29) se fasse d'un côté dans un sens de rotation correspondant au sens de renvoi du bras support de ceinture (3) afin que la ceinture (3) soit de la sorte retournée avec le bras support de ceinture (3).

8. Dispositif de ceinture de sécurité selon l'une quelconque des revendications 1 à 7, **caractérisé en ce que** le bras support de ceinture (3) se présente en partie sous la forme d'une crémaillère pour une commande à crémaillère (5).

9. Dispositif de ceinture de sécurité selon l'une quelconque des revendications 1 à 8, **caractérisé en ce que** le mécanisme de commande pour l'applicateur de ceinture (2) est commandé de manière arbitraire par un usager de siège au moyen d'un palpeur et/ou de commutateurs d'ouverture de portes, de commutateurs d'occupation de sièges, etc.

10. Dispositif de ceinture de sécurité selon l'une quelconque des revendications 1 à 9, **caractérisé en ce que** deux applicateurs de ceinture (2) sont montés dans un véhicule cabriolet sans colonnes B, respectivement, dans une zone latérale supérieure de la carrosserie derrière les dossiers de sièges avant.
